# EUROPÄISCHE PATENTANMELDUNG

(11) **EP 4 461 478 A1**
(43) Veröffentlichungstag der Anmeldung: **13.11.2024**
(21) Anmeldenummer: 24174641.1
(22) Anmeldetag: 07.05.2024
(51) Int. Cl.: B25J 15/00, B25J 15/06

(54) **GREIFEREINHEIT ZUM GREIFEN VON PLATTENFÖRMIGEN WERKSTÜCKEN UND HANDHABUNGSSYSTEM MIT EINER DERARTIGEN GREIFEREINHEIT**

(30) Priorität: 11.05.2023 DE 102023112520
(71) Anmelder: HOLZ-HER GmbH, 72622 Nürtingen (DE)
(72) Erfinder: LORBER, Denis, 72663 Großbettlingen (DE); STOLZ, Jochen, 72574 Bad Urach (DE)
(74) Vertreter: Hoeger, Stellrecht & Partner Patentanwälte mbB

(57) **Zusammenfassung**

Die Erfindung betrifft eine Greifereinheit (14) zum Greifen von plattenförmigen Werkstücken, mit einer Basis (16), die eine Verbindungsvorrichtung (18) zum Verbinden der Greifereinheit (14) mit einer Handhabungseinheit (12) aufweist, und mit mehreren Saugvorrichtungen, die jeweils unabhängig voneinander mit Unterdruck beaufschlagbar sind und jeweils eine Saugfläche (20) aufweisen zum Halten des Werkstücks, wobei die Saugflächen (20) in einer Grundstellung der Saugvorrichtungen eine gemeinsame Saugebene (22) definieren, die sich in einer X- und einer Y-Richtung erstreckt. Um die Greifereinheit (14) derart weiterzubilden, dass sie eine verbesserte Handhabung sowohl von großflächigen plattenförmigen Werkstücken als auch von abgetrennten Teilplatten ermöglicht, wird erfindungsgemäß vorgeschlagen, dass die Greifereinheit (14) eine oder mehrere erste Saugvorrichtungen (24, 26, 28, 30) aufweist, wobei jede erste Saugvorrichtung (24, 26, 28, 30) unabhängig von allen anderen Saugvorrichtungen der Greifereinheit (14) in der Grundstellung sowie in einer bezogen auf die Grundstellung in Z-Richtung vorgelagerten vorderen Stellung und einer bezogen auf die Grundstellung in Z-Richtung zurückgesetzten hinteren Stellung positionierbar ist. Außerdem wird ein Handhabungssystem (10) mit einer derartigen Greifereinheit (14) und mit einer Handhabungseinheit (12) vorgeschlagen.

## Beschreibung

Die Erfindung betrifft eine Greifereinheit zum Greifen von plattenförmigen Werkstücken, die bevorzugt aus Holz oder Holzersatzstoffen bestehen, mit einer Basis, die eine Verbindungsvorrichtung zum Verbinden der Greifereinheit mit einer Handhabungseinheit aufweist, und mit mehreren Saugvorrichtungen, die jeweils unabhängig voneinander mit Unterdruck beaufschlagbar sind und jeweils eine Saugfläche ausbilden zum Halten des Werkstückes, wobei die Saugflächen in einer Grundstellung der Saugvorrichtungen eine gemeinsame Saugebene definieren, die sich in einer X-Richtung und einer Y-Richtung erstreckt.

Außerdem betrifft die Erfindung ein Handhabungssystem zum Transportieren und Positionieren von plattenförmigen Werkstücken, die bevorzugt aus Holz oder Holzersatzstoffen bestehen, mit einer Greifereinheit und mit mit einer Handhabungseinheit, die mit der Greifereinheit verbunden ist.

Zur maschinellen Bearbeitung von plattenförmigen Werkstücken, vorzugsweise Werkstücken, die aus Holz oder Holzersatzstoffen bestehen, kommen häufig Bearbeitungsvorrichtungen zum Einsatz, die mindestens ein Bearbeitungsaggregat, beispielsweise ein Fräs-, Säge- oder Bohraggregat aufweisen, und die mit Hilfe eines Handhabungssystems mit den zu bearbeitenden Werkstücken bestückt werden und von denen die bearbeiteten Werkstücke mittels des Handhabungssystems abtransportiert werden.

Das Handhabungssystem weist eine Greifereinheit auf zum Halten der Werkstücke, sowie eine Handhabungseinheit, beispielsweise einen um mehrere Achsen bewegbaren Roboterarm oder ein Portalroboter, zum Transportieren und Positionieren der Werkstücke.

Bekannte Greifereinheiten weisen eine Basis auf, die eine Verbindungsvorrichtung zum Verbinden der Greifereinheit mit der Handhabungseinheit aufweist, sowie mehrere Saugvorrichtungen, die unabhängig voneinander mit Unterdruck beaufschlagbar sind und jeweils eine Saugfläche aufweisen zum Halten eines Werkstückes, wobei die Saugflächen in einer Grundstellung der Saugvorrichtungen eine gemeinsame Saugebene definieren, die sich in einer X- und einer Y-Richtung erstrecken.

Durch Beaufschlagung der Saugvorrichtungen mit Unterdruck kann das Werkstück an die Saugflächen angesaugt werden, um das Werkstück an der Greifereinheit zu halten. Anschließend kann das Werkstück zusammen mit der Greifereinheit von der Handhabungseinheit zu einer Bearbeitungsvorrichtung transportiert werden. Die Saugvorrichtungen können dann belüftet werden, so dass die Greifereinheit das Werkstück freigibt und dieses dann bearbeitet werden kann.

Die Bearbeitung kann beispielsweise derart erfolgen, dass ein großflächiges plattenförmiges Werkstück in einzelne Teilstücke aufgeteilt wird, die anschließend weiterbearbeitet werden. Hierbei ergibt sich die Schwierigkeit, dass das großflächige Werkstück zunächst in seiner Gesamtheit mittels der Greifereinheit zur Bestückung der Bearbeitungsvorrichtung gehalten werden muss, dass aber nach dem Aufteilen des großflächigen Werkstückes in einzelne Teilstücke die Teilstücke von der Bearbeitungsvorrichtung abtransportiert werden müssen.

Aufgabe der vorliegenden Erfindung ist es daher, eine Greifereinheit der eingangs genannten Art derart weiterzubilden, dass sie eine verbesserte Handhabung sowohl von großflächigen plattenförmigen Werkstücken als auch von abgetrennten Teilstücken ermöglicht.

Diese Aufgabe wird bei einer Greifereinheit der gattungsgemäßen Art erfindungsgemäß dadurch gelöst, dass die Greifereinheit eine oder mehrere erste Saugvorrichtungen aufweist, wobei jede erste Saugvorrichtung unabhängig von allen anderen Saugvorrichtungen der Greifereinheit in der Grundstellung sowie in einer bezogen auf die Grundstellung in Z-Richtung vorgelagerten vorderen Stellung und einer bezogen auf die Grundstellung in Z-Richtung zurückgesetzten hinteren Stellung positionierbar ist.

Die erfindungsgemäße Greifereinheit weist mehrere Saugvorrichtungen auf, die jeweils unabhängig voneinander mit Unterdruck beaufschlagt werden können und jeweils eine Saugfläche aufweisen. Die Saugflächen der Saugvorrichtungen definieren in einer Grundstellung eine gemeinsame Saugebene, die sich in X- und in Y-Richtung erstreckt.

Zum Halten eines großflächigen plattenförmigen Werkstückes können die Saugvorrichtungen ihre Grundstellung einnehmen und jeweils mit Unterdruck beaufschlagt werden, so dass das großflächige Werkstück unter der Wirkung des Unterdrucks zuverlässig an den Saugflächen gehalten wird. Dies erlaubt es insbesondere, einer Bearbeitungsvorrichtung ein großflächiges Werkstück zuzuführen. Wird das Werkstück anschließend mittels der Bearbeitungsvorrichtung in einzelne Teilstücke aufgeteilt, so kann ein einzelnes Teilstück für den anschließenden Abtransport mittels der Greifereinheit gehalten werden, wobei nur eine oder mehrere erste Saugvorrichtungen mit Unterdruck beaufschlagt werden, die zum Halten des Teilstücks eine bezogen auf die Grundstellung in Z-Richtung vorgelagerte vordere Stellung einnehmen können, so dass die restlichen Saugvorrichtungen und insbesondere deren Saugflächen einen Abstand zum Werkstück einnehmen. Dies erlaubt es, ein abgetrenntes Teilstück gezielt aus dem Werkstück herauszulösen und mittels des Handhabungssystems abzutransportieren.

Nach dem Abtransport des aus dem Werkstück herausgelösten Teilstücks kann bei Bedarf auch das restliche Werkstück abtransportiert werden, wobei die mindestens eine erste Saugvorrichtung, die zuvor eine vorgelagerte Stellung eingenommen hat, bei Bedarf eine bezogen auf die Grundstellung in Z-Richtung zurückgezogene hintere Stellung einnehmen kann.

Bevorzugt weist die Greifereinheit mehrere erste Saugvorrichtungen auf, die unabhängig voneinander sowohl eine Grundstellung als auch eine vordere Stellung und eine zurückgesetzte Stellung einnehmen können und unabhängig voneinander mit Unterdruck beaufschlagbar sind. Dies erlaubt es, unterschiedlich große Teilstücke zuverlässig zu halten und abzutransportieren.

Günstig ist es, wenn mindestens eine erste Saugvorrichtung in einem ersten Randbereich der Saugebene angeordnet ist. Es hat sich gezeigt, dass dadurch die Positionierung der mindestens einen ersten Saugvorrichtung im Bereich eines abgetrennten Teilstücks vereinfacht werden kann.

Besonders günstig ist es, wenn sämtliche erste Saugvorrichtungen im ersten Randbereich der Saugebene angeordnet sind.

Bei einer bevorzugten Ausgestaltung der Erfindung weist die Greifereinheit in Ergänzung zu der mindestens einen ersten Saugvorrichtung zumindest eine zweite Saugvorrichtung und mindestens eine dritte Saugvorrichtung auf, wobei die mindestens eine zweite Saugvorrichtung in einem dem ersten Randbereich gegenüberliegenden zweiten Randbereich der Saugebene angeordnet ist, wobei jede zweite Saugvorrichtung unabhängig von allen anderen Saugvorrichtungen in der Grundstellung sowie in einer bezogen auf die Grundstellung in Z-Richtung zurückgesetzten hinteren Stellung positionierbar ist, und wobei die mindestens eine dritte Saugvorrichtung zwischen dem ersten und dem zweiten Randbereich der Saugebene positioniert ist. Zusätzlich zu der mindestens einen ersten Saugvorrichtung, die wahlweise in der Grundstellung sowie in einer bezogen auf die Grundstellung in Z-Richtung vorgelagerten vorderen Stellung und einer bezogen auf die Grundstellung in Z-Richtung zurückgesetzten hinteren Stellung positionierbar ist, kommt bei einer derartigen Ausgestaltung der erfindungsgemäßen Greifereinheit zumindest eine zweite Saugvorrichtung zum Einsatz, die wahlweise in der Grundstellung oder in einer bezogen auf die Grundstellung in Z-Richtung zurückgesetzten hinteren Stellung positionierbar ist, wobei die mindestens eine zweite Saugvorrichtung in einem zweiten Randbereich der Saugebene angeordnet ist, der dem ersten Randbereich gegenüberliegt. Zwischen dem ersten Randbereich und dem zweiten Randbereich ist mindestens eine dritte Saugvorrichtung angeordnet. Eine derartige Ausgestaltung erleichtert das Abnehmen eines plattenförmigen Werkstücks mit verhältnismäßig geringer Materialstärke von einem Werkstückstapel. Hierbei können zunächst sämtliche Saugvorrichtungen ihre Grundstellung einnehmen und mit Unterdruck beaufschlagt werden, so dass das Werkstück an die Saugflächen der Saugvorrichtungen angesaugt wird. Anschließend können die ersten und zweiten Saugvorrichtungen, die in den einander gegenüberliegenden Randbereichen der Saugebene angeordnet sind, in ihre bezogen auf die Grundstellung in Z-Richtung zurückgesetzte hintere Stellung überführt werden, wohingegen die mindestens eine dritte Saugvorrichtung, die zwischen den ersten und zweiten Randbereichen der Saugebene positioniert ist, ihre Grundstellung beibehält. Durch die Überführung der ersten und zweiten Saugvorrichtungen in ihre bezogen auf die Grundstellung in Z-Richtung zurückgesetzte hintere Stellung wird das angesaugte Werkstück, das eine verhältnismäßig geringe Materialstärke aufweist, elastisch verformt und kann dadurch zuverlässig vom Werkstückstapel getrennt werden, ohne dass die Gefahr besteht, dass an diesem Werkstück ein weiteres Werkstück mit verhältnismäßig geringer Materialstärke anhaftet. Das vom Werkstückstapel abzunehmende Werkstück wird sozusagen vom restlichen Werkstückstapel "abgeschält".

Günstig ist es, wenn die mindestens eine dritte Saugvorrichtung, die zwischen dem ersten und dem zweiten Rastbereich der Saugebene angeordnet ist, ortsfest an der Basis der Greifereinheit gehalten ist und die Grundstellung einnimmt.

Um auch sehr großflächige Werkstücke mittels der Greifereinheit zuverlässig halten zu können, ist es von Vorteil, wenn die mindestens eine erste Saugvorrichtung und/oder die mindestens eine zweite Saugvorrichtung relativ zu den anderen Saugvorrichtungen in X-Richtung zwischen einer inneren Position und einer äußeren Position hin und her bewegbar sind, wobei sie in der inneren Position einen kleineren Abstand zu der mindestens einen dritten Saugvorrichtung einnehmen als in der äußeren Position. Eine derartige Ausgestaltung ermöglicht es, die Größe der Saugebene in X-Richtung zu vergrößern, indem die mindestens eine erste Saugvorrichtung und/oder die mindestens eine zweite Saugvorrichtung in ihre äußere Position bewegt wird, in der sie einen größeren Abstand zu der mindestens einen dritten Saugvorrichtung einnimmt als in der inneren Position.

Von besonderem Vorteil ist es, wenn die Greifereinheit mehrere erste Saugvorrichtungen aufweist, wobei zumindest eine erste Saugvorrichtung unabhängig von den anderen ersten Saugvorrichtungen in eine in X-Richtung über die äußeren Positionen der anderen Saugvorrichtungen herausragende Endposition bewegbar ist. Bei einer derartigen Ausgestaltung der Erfindung kann zumindest eine erste Saugvorrichtung bezogen auf die X-Richtung der Saugebene eine innere Position, eine äußere Position und zusätzlich noch eine in X-Richtung über die äußere Position der anderen ersten Saugvorrichtungen hinausragende Endposition einnehmen. Dies hat den Vorteil, dass ein verhältnismäßig kleinflächiges Werkstück, insbesondere ein zuvor aus einem großflächigen Werkstück herausgetrenntes Teilstück in einen Schacht einer Bearbeitungsvorrichtung eingebracht werden kann, ohne dass das Einbringen durch die Position der restlichen Saugvorrichtungen beeinträchtigt wird.

Die Bewegung der mindestens einen ersten Saugvorrichtung aus ihrer Grundstellung in die bezogen auf die Grundstellung in Z-Richtung vorgelagerte vordere Stellung und in die bezogen auf die Grundstellung in Z-Richtung zurückgesetzte hintere Stellung erfolgt bei einer bevorzugten Ausgestaltung der Erfindung mit Hilfe von einem oder mehreren pneumatischen oder hydraulischen Kolben-Zylinder-Aggregate. Alternativ kann beispielsweise ein Elektromotor zum Einsatz kommen.

Die Bewegung der mindestens einen zweiten Saugvorrichtung aus der Grundstellung in ihre in Z-Richtung zurückgesetzte hintere Stellung erfolgt bevorzugt mittels eines hydraulischen oder pneumatischen Kolben-Zylinder-Aggregats. Alternativ kann beispielsweise ein Elektromotor zum Einsatz kommen.

Die Bewegung der mindestens einen ersten Saugvorrichtung und/oder der mindestens einen zweiten Saugführung zwischen der inneren Position und der äußeren Position erfolgt bevorzugt mittels eines hydraulischen oder pneumatischen Kolben-Zylinder-Aggregats. Alternativ kann beispielsweise ein Elektromotor zum Einsatz kommen.

Günstig ist es, wenn die mindestens eine erste Saugvorrichtung und/oder die mindestens eine zweite Saugvorrichtung in der Grundstellung festklemmbar sind.

Der Hub mindestens einen ersten Saugvorrichtung aus der Grundstellung in die bezogen auf die Grundstellung in Z-Richtung vorgelagerte vordere Stellung beträgt bevorzugt mindestens 10 mm, insbesondere etwa 20 mm.

Der Hub der mindestens einen ersten Saugvorrichtung aus der Grundstellung in die bezogen auf die Grundstellung in Z-Richtung zurückgesetzte hintere Stellung beträgt bei einer bevorzugten Ausgestaltung der Erfindung mindestens 10 mm, insbesondere etwa 20 mm.

Der Hub der mindestens einen zweiten Saugvorrichtung aus der Grundstellung in die bezogen auf die Grundstellung in Z-Richtung zurückgesetzte hintere Stellung beträgt bei einer bevorzugten Ausführungsform der Erfindung mindestens 10 mm, insbesondere etwa 20 mm.

Wie eingangs erwähnt, betrifft die Erfindung auch ein Handhabungssystem zum Transportieren und Positionieren von plattenförmigen Werkstücken. Eine besonders einfache Handhabung sowohl von großflächigen Werkstücken als auch von Teilstücken wird erfindungsgemäß dadurch erzielt, dass das Handhabungssystem eine Greifereinheit der voranstehend genannten Art aufweist sowie eine Handhabungseinheit, die mit der Greifereinheit verbunden ist. Die Handhabungseinheit kann beispielsweise in Form eines um mehrere Achsen drehbaren Roboterarms oder beispielsweise in Form eines Portalroboters ausgestaltet sein.

Die nachfolgende Beschreibung einer bevorzugten Ausführungsform der Erfindung dient im Zusammenhang mit der Erfindung der näheren Erläuterung. Es zeigen:
- Figur 1:: eine Seitenansicht eines Handhabungssystems zum Transportieren und Positionieren von plattenförmigen Werkstücken mit einer Greifereinheit und einer Handhabungseinheit;
- Figur 2:: eine Ansicht der Handhabungseinheit in Richtung von Pfeil A aus Figur 1;
- Figur 3:: eine Seitenansicht der Handhabungseinheit in Richtung von Pfeil B aus Figur 2, wobei erste Saugvorrichtungen eine Grundstellung einnehmen.
- Figur 4:: eine Seitenansicht der Greifereinheit entsprechend Figur 3, wobei einzelne Bereiche der Greifereinheit ausgeblendet sind und drei erste Saugvorrichtungen ihre Grundstellung und eine vierte Saugvorrichtung eine bezogen auf die Grundstellung in Z-Richtung vorgelagerte vordere Stellung einnimmt;
- Figur 5:: eine Seitenansicht der Greifereinheit entsprechend Figur 4, wobei zwei erste Saugvorrichtungen eine Grundstellung einnehmen und eine weitere erste Saugvorrichtung eine bezogen auf die Grundstellung in Z-Richtung vorgelagerte vordere Stellung einnimmt und noch eine weitere erste Saugvorrichtung eine bezogen auf die Grundstellung in Z-Richtung zurückgesetzte hintere Stellung einnimmt.
- Figur 6:: eine Seitenansicht der Greifereinheit entsprechend Figur 2, wobei die ersten Saugvorrichtungen und eine zweite Saugvorrichtung eine äußere Position einnehmen;
- Figur 7:: eine Seitenansicht der Greifereinheit in Richtung von Pfeil C aus Figur 6 mit einem an der Greifereinheit gehaltenen Werkstück;

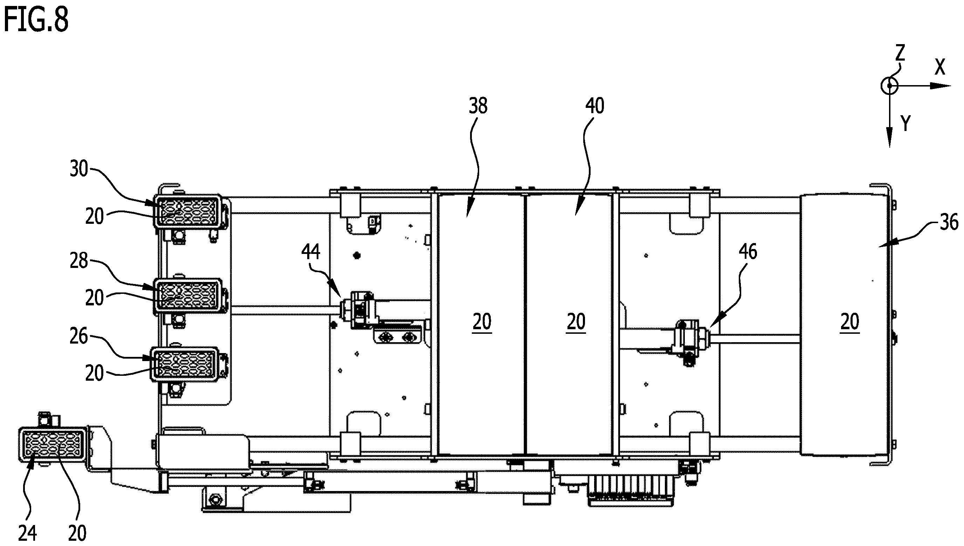

- Figur 8:: eine Seitenansicht der Greifereinheit entsprechend Figur 6, wobei eine erste Saugvorrichtung eine in X-Richtung über die äußere Position der restlichen ersten Saugvorrichtungen herausragende Endposition einnimmt.

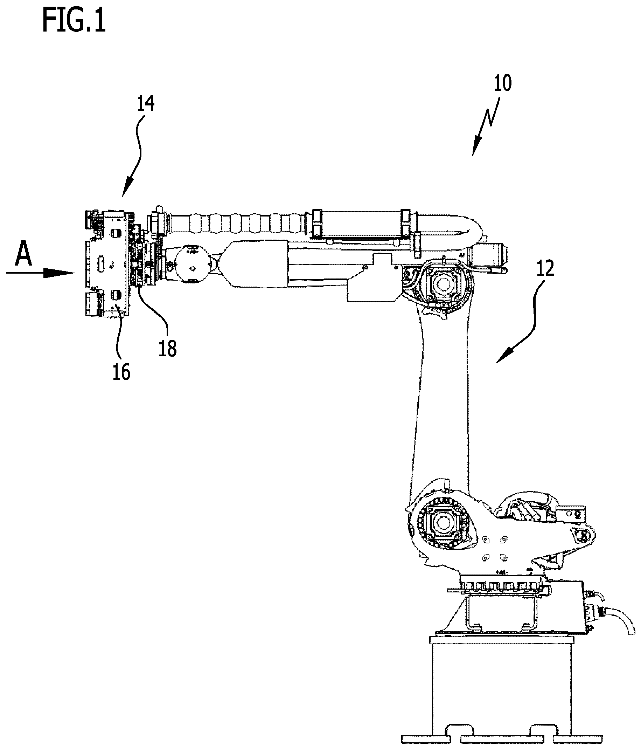

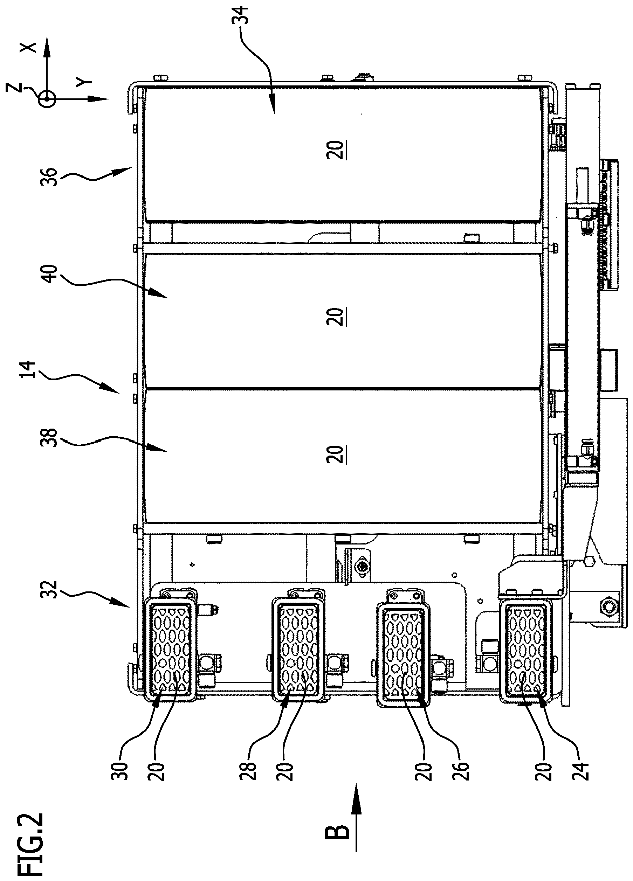

In Figur 1 ist schematisch eine vorteilhafte Ausführungsform eines erfindungsgemäßen Handhabungssystems dargestellt, das insgesamt mit dem Bezugszeichen 10 belegt ist. Das Handhabungssystem 10 umfasst eine Handhabungseinheit 12, die beispielhaft als Roboterarm ausgestaltet ist, der um mehrere Achsen bewegbar ist. Derartige Roboterarme sind dem Fachmann bekannt und bedürfen daher vorliegend keiner näheren Erläuterung. Außerdem umfasst das Handhabungssystem 10 eine vorteilhafte Ausführungsform einer erfindungsgemäßen Greifereinheit 14, die in den Figuren 2 bis 7 detaillierter dargestellt ist.

Die Greifereinheit 14 weist eine Basis 16 auf mit einer Verbindungsvorrichtung 18, die mit der Handhabungseinheit 12 verbunden ist. Außerdem weist die Greifereinheit 14 mehrere Saugvorrichtungen auf, die nachfolgend näher erläutert werden und unabhängig voneinander mit Unterdruck beaufschlagbar sind. Die Saugvorrichtungen weisen jeweils eine Saugfläche 20 auf, die in einer Grundstellung der Saugvorrichtungen eine gemeinsame Saugebene 22 definieren. Die Saugebene 22 erstreckt sich in einer X-Richtung und in einer Y-Richtung. Dies wird beispielsweise aus Figur 2 deutlich.

Im Einzelnen weist die Greifereinheit 14 vier erste Saugvorrichtungen 24, 26, 28, 30 auf, die in einem ersten Randbereich 32 der Saugebene im Abstand zueinander angeordnet sind, sowie eine zweite Saugvorrichtung 34, die in einem dem ersten Randbereich 32 gegenüberliegenden zweiten Randbereich 36 der Saugebene angeordnet ist, sowie zwei dritte Saugvorrichtungen 38, 40, die zwischen dem ersten Randbereich 32 und dem zweiten Randbereich 36 positioniert sind. Die zweite Saugvorrichtung 34 und die beiden dritten Saugvorrichtungen 38, 40 sind jeweils in Form von Saugplatten ausgestaltet, wohingegen die ersten Saugvorrichtungen 24, 26, 28 und 30 in Form von Saugköpfen ausgestaltet sind.

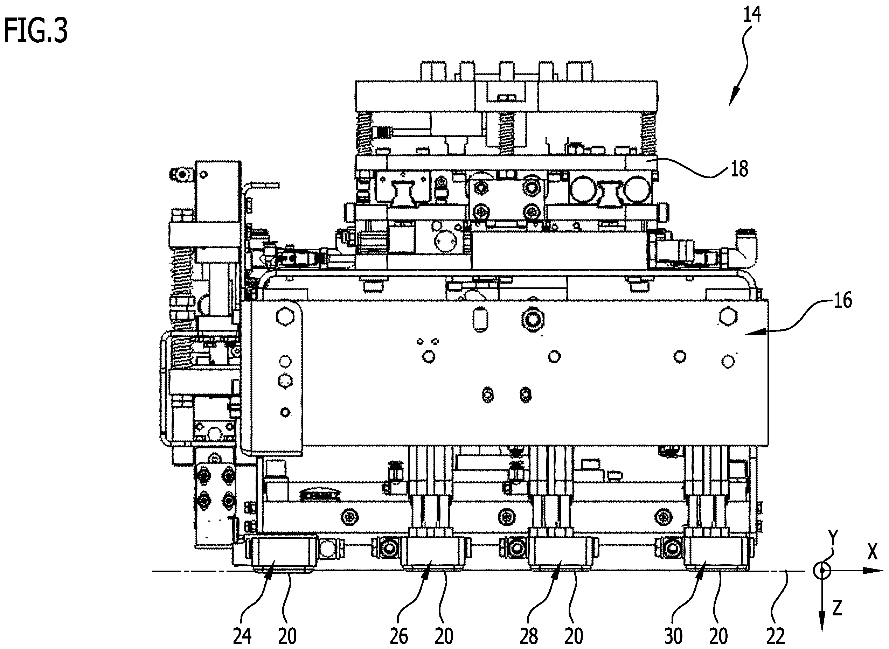

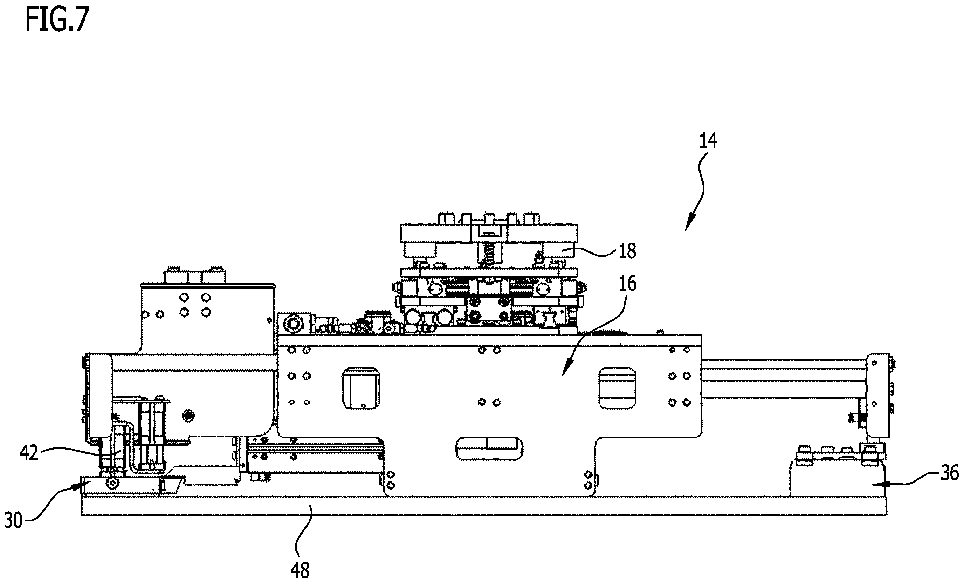

Die ersten Saugvorrichtungen 24, 26, 28, 30 sind unabhängig voneinander und unabhängig von den restlichen Saugvorrichtungen 34, 38 und 40 ausgehend von einer in Figur 3 dargestellten Grundstellung, in der die Saugflächen 20 der ersten Saugvorrichtungen 24, 26, 28, 30 in der Saugebene 22 angeordnet sind, mit Hilfe eines der jeweiligen Saugvorrichtung 24, 26, 28 bzw. 30 zugeordneten Antriebsaggregates in eine bezogen auf die Grundstellung in Z-Richtung vorgelagerte vordere Stellung und in eine bezogen auf die Grundstellung in Z-Richtung zurückgesetzte hintere Stellung verfahrbar. In der dargestellten Ausführungsform sind die jeweils zugeordneten Antriebsaggregate jeweils als pneumatisches Kolben-Zylinder-Aggregat 42 ausgebildet. Dies wird insbesondere aus Figur 7 deutlich.

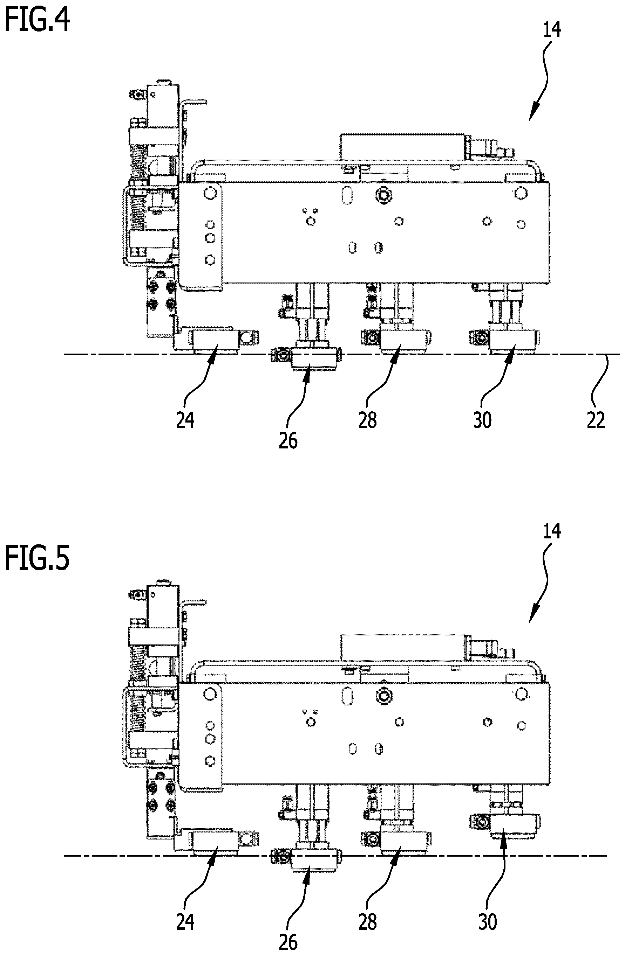

In Figur 3 nehmen die ersten Saugvorrichtungen 24, 26, 28, 30 jeweils ihre Grundstellung ein. In Figur 4 nehmen beispielhaft lediglich die ersten Saugvorrichtungen 24, 28 und 30 ihre Grundstellung ein, wohingegen die erste Saugvorrichtung 26 ihre bezogen auf die Grundstellung in Z-Richtung vorgelagerte vordere Stellung einnimmt. In Figur 5 nehmen beispielhaft lediglich die ersten Saugvorrichtungen 24 und 28 ihre Grundstellung ein, wohingegen die erste Saugvorrichtung 26 ihre bezogen auf die Grundstellung in Z-Richtung vorgelagerte vordere Stellung einnimmt und die erste Saugvorrichtung 30 ihre bezogen auf die Grundstellung in Z-Richtung zurückgesetzte hintere Stellung einnimmt. Jede der ersten vier Saugvorrichtungen 24, 24, 28 und 30 kann unabhängig von den anderen Saugvorrichtungen wahlweise ihre Grundstellung oder ihre vordere Stellung oder ihre hintere Stellung einnehmen.

Die im zweiten Randbereich 36 der Saugebene 22 angeordnete zweite Saugvorrichtung 34 kann mittels eines an sich bekannten und deshalb in der Zeichnung zur Erzielung einer besseren Übersicht nicht dargestellten weiteren Antriebaggregats, das beispielsweise als Kolben-Zylinder-Aggregat ausgestaltet sein kann, unabhängig von allen anderen Saugvorrichtungen der Greifereinheit 14 zwischen einer in Figur 7 dargestellten Grundstellung und einer bezogen auf die Grundstellung in Z-Richtung zurückgesetzten hinteren Stellung hin und her bewegt werden.

Der Bewegungshub der ersten Saugvorrichtungen 24, 26, 28, 30 ausgehend von der Grundstellung in ihre vordere Stellung und in ihre hintere Stellung beträgt im dargestellten Ausführungsbeispiel jeweils ± 20 mm.

Der Bewegungshub der zweiten Saugvorrichtung 34 ausgehend von ihrer Grundstellung in ihre hintere Stellung beträgt im dargestellten Ausführungsbeispiel 20 mm.

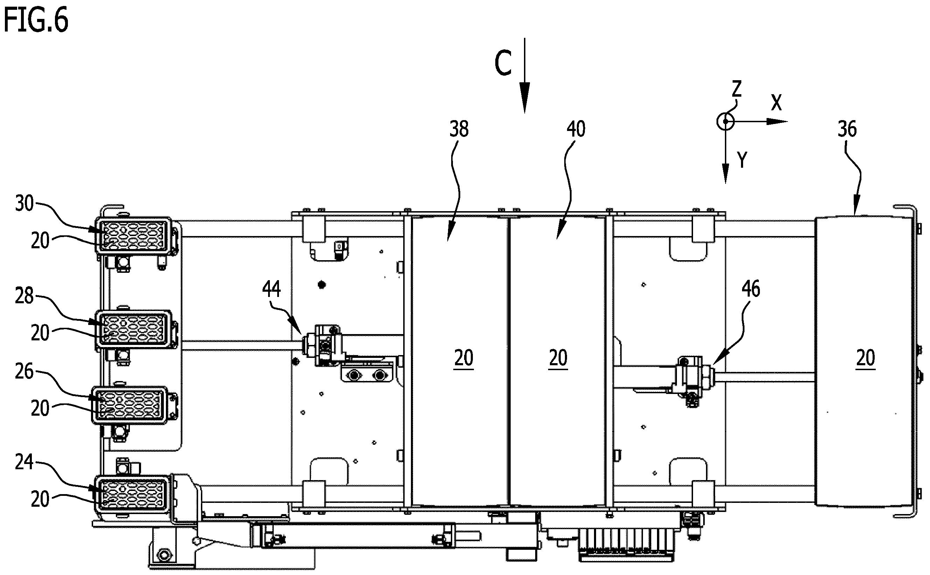

Zusätzlich zu ihrer Bewegungsmöglichkeit in Z-Richtung können die ersten Saugvorrichtungen 24, 26, 28, 30 mittels eines gemeinsamen Antriebsaggregats, das im dargestellten Ausführungsbeispiel als pneumatisches Kolben-Zylinder-Aggregat 44 ausgestaltet ist, in X-Richtung zwischen einer beispielsweise in Figur 2 dargestellten inneren Position und einer beispielsweise in Figur 6 dargestellten äußeren Position hin und her bewegt werden, wobei sie in ihrer inneren Position einen kleineren Abstand zu den dritten Saugvorrichtungen 38, 40 der Greifereinheit 14 einnehmen als in ihrer äußeren Position.

In entsprechender Weise kann auch die zweite Saugvorrichtung 34 mittels eines weiteren Antriebsaggregats, das im dargestellten Ausführungsbeispiel als Kolben-Zylinder-Aggregat 46 ausgestaltet ist, in X-Richtung zwischen einer in Figur 2 dargestellten inneren Position und einer beispielsweise in Figur 6 dargestellten äußere Position hin und her bewegt werden.

Die Bewegung der ersten Saugvorrichtungen 24, 26, 28, 30 und der zweiten Saugvorrichtung 34 in X-Richtung ermöglicht es, die Saugebene bedarfsweise in X-Richtung zu vergrößern, so dass auch ein großflächiges plattenförmiges Werkstück 48, wie es beispielhaft in Figur 7 dargestellt ist, zuverlässig an der Greifereinheit 14 gehalten werden kann.

Eine der ersten vier Saugvorrichtungen 24, 26, 28, 30, im dargestellten Ausführungsbeispiel die erste Saugvorrichtung 24, kann darüber hinaus ausgehend von ihrer in Figur 6 dargestellten äußeren Position mittels eines zusätzlichen Antriebsaggregats, das im dargestellten Ausführungsbeispiel als pneumatisches Kolben-Zylinder-Aggregat ausgebildet ist, in eine in X-Richtung über die äußeren Positionen der restlichen ersten Saugvorrichtungen 26, 28, 30 herausragende Endposition und zurück in die äußere Position bewegt werden. Dies wird insbesondere aus Figur 7 deutlich.

Mittels des erfindungsgemäßen Handhabungssystems 10 können plattenförmige Werkstücke, die bevorzugt aus Holz oder Holzersatzstoffen bestehen, transportiert und positioniert werden. Beispielsweise kann mit Hilfe des Handhabungssystems 10 eine an sich bekannte und deshalb zur Erzielung einer besseren Übersicht in der Zeichnung nicht dargestellte CNC-Bearbeitungsvorrichtung mit einem großflächigen plattenförmigen Werkstück beschickt werden. Hierbei können sämtliche Saugvorrichtungen der Greifereinheit 14 mit Unterdruck beaufschlagt werden und ihre Grundstellung einnehmen, so dass das Werkstück an die Saugflächen 20 der Saugvorrichtungen angesaugt wird und das Werkstück zur Bearbeitungsvorrichtung transportiert werden kann. Anschließend können die Saugvorrichtungen belüftet werden, so dass sie das Werkstück freigeben und das Handhabungssystem vom Werkstück entfernt werden kann. Bei einer anschließenden Bearbeitung kann das Werkstück beispielsweise in Teilstücke aufgeteilt werden. Die einzelnen Teilstücke können dann vom restlichen Werkstück abgenommen und abtransportiert werden.

Hierzu kann das Handhabungssystem 10 wieder vor dem Werkzeug positioniert werden, wobei in Abhängigkeit von der Größe des Teilstücks eine oder mehrere erste Saugvorrichtungen 24, 26, 28, 30 fluchtend zum Teilstück ausgerichtet und ausgehend von ihrer Grundstellung in ihre bezogen auf die Grundstellung in Z-Richtung vorgelagerte vordere Stellung bewegt und mit Unterdruck beaufschlagt werden. Dies ermöglicht es, die aufgeteilten Teilstücke aus dem Werkstück herauszunehmen und anschließend mittels des Handhabungssystems abzutransportieren.

Sollen Werkstücke mit einer verhältnismäßig geringen Materialstärke von einem Werkstückstapel abgenommen werden, so können die Saugvorrichtungen der Greifereinheit 14 zunächst ihre Grundstellung einnehmen und mit Unterdruck beaufschlagt werden, um ein Werkstück mit verhältnismäßig geringer Materialstärke anzusaugen. Anschließend können die ersten Saugvorrichtungen 24, 26, 28, 30 und die zweite Saugvorrichtung 34 ausgehend von ihrer Grundstellung in ihre bezogen auf die Grundstellung in Z-Richtung zurückgesetzte hintere Stellung bewegt werden, wobei sich das Werkstück elastisch verformt und sich dadurch von dem unmittelbar benachbart angeordneten Werkstück des Werkstückstapels ablöst, ohne dass die Gefahr besteht, dass das unmittelbar benachbarte Werkstück an dem abzunehmenden Werkstück anhaftet. Nach der Entnahme des Werkstücks mit verhältnismäßig geringer Materialstärke vom Werkstückstapel können die ersten Saugvorrichtungen 24, 26, 28, 30 und die zweite Saugvorrichtung 34 wieder in ihre Grundstellung bewegt werden, um anschließend das Werkstück mittels des Handhabungssystems 10 zu transportieren.

Das erfindungsgemäße Handhabungssystem 10, das die erfindungsgemäße Greifereinheit 14 aufweist, erlaubt somit eine einfache Handhabung sowohl von großflächigen plattenförmigen Werkstücken als auch von abgetrennten Teilstücken.

## Patentansprüche

1. Greifereinheit zum Greifen von plattenförmigen Werkstücken, die bevorzugt aus Holz oder Holzersatzstoffen bestehen, mit einer Basis (16), die eine Verbindungsvorrichtung (18) zum Verbinden der Greifereinheit mit einer Handhabungseinheit (12) aufweist, und mit mehreren Saugvorrichtungen (24, 26, 28, 30, 34, 38, 40), die jeweils unabhängig voneinander mit Unterdruck beaufschlagbar sind und jeweils eine Saugfläche (20) aufweisen zum Halten des Werkstücks, wobei die Saugflächen (20) in einer Grundstellung der Saugvorrichtungen (24, 26, 28, 30, 34, 38, 40) eine gemeinsame Saugebene (22) definieren, die sich in X-Richtung und einer Y-Richtung erstreckt, **dadurch gekennzeichnet, dass** die Greifereinheit (14) eine oder mehrere erste Saugvorrichtungen (24, 26, 28, 30) aufweist, wobei jede erste Saugvorrichtung (24, 26, 28, 30) unabhängig von allen anderen Saugvorrichtungen der Greifereinheit (14) in der Grundstellung sowie in einer bezogen auf die Grundstellung in Z-Richtung vorgelagerten vorderen Stellung und einer bezogen auf die Grundstellung in Z-Richtung zurückgesetzten hinteren Stellung positionierbar ist.

2. Greifereinheit nach Anspruch 1, **dadurch gekennzeichnet, dass** mindestens eine erste Saugvorrichtung (24, 26, 28, 30) in einem ersten Randbereich (32) der Saugebene (22) angeordnet ist.

3. Greifereinheit nach Anspruch 2, **dadurch gekennzeichnet, dass** sämtliche erste Saugvorrichtungen (24, 26, 28, 30) im ersten Randbereich (32) der Saugebene (22) angeordnet sind.

4. Greifereinheit nach Anspruch 2 oder 3, **dadurch gekennzeichnet, dass** die Greifereinheit (14) zumindest eine zweite Saugvorrichtung (34) und mindestens eine dritte Saugvorrichtung (38, 40) aufweist, wobei die mindestens eine zweite Saugvorrichtung (34) in einem dem ersten Randbereich (32) gegenüberliegenden zweiten Randbereich (36) der Saugebene (22) angeordnet ist, wobei jede zweite Saugvorrichtung (34) unabhängig von allen anderen Saugvorrichtungen der Greifereinheit (14) in der Grundstellung sowie in einer bezogen auf die Grundstellung in Z-Richtung zurückgesetzten hinteren Stellung positionierbar ist, und wobei die mindestens eine dritte Saugvorrichtung (38, 40) zwischen dem ersten Randbereich (32) und dem zweiten Randbereich (36) der Saugebene (22) positioniert ist.

5. Greifereinheit nach Anspruch 4, **dadurch gekennzeichnet, dass** die mindestens eine dritte Saugvorrichtung (38, 40) ortsfest an der Basis (16) gehalten ist.

6. Greifereinheit nach Anspruch 4 oder 5, **dadurch gekennzeichnet, dass** die mindestens eine erste Saugvorrichtung (24, 26, 28, 30) und/oder die mindestens eine zweite Saugvorrichtung (34) relativ zu der mindestens einen dritten Saugvorrichtung (38, 40) in X-Richtung zwischen einer inneren Position und einer äußeren Position hin und her bewegbar sind, wobei sie in der inneren Position einen kleineren Abstand zu der mindestens einen dritten Saugvorrichtung (38, 40) einnehmen als in der äußeren Position.

7. Greifereinheit nach Anspruch 6, **dadurch gekennzeichnet, dass** die Greifereinheit (14) mehrere erste Saugvorrichtungen (24, 26, 28, 30) aufweist, wobei zumindest eine erste Saugvorrichtung (24) unabhängig von den anderen ersten Saugvorrichtungen (26, 28, 30) in eine in X-Richtung über die äußere Position der anderen ersten Saugvorrichtungen (26, 28, 30) herausragende Endposition bewegbar ist.

8. Handhabungssystem zum Transportieren und Positionieren von plattenförmigen Werkstücken, die bevorzugt aus Holz oder Holzersatzstoffen bestehen, mit einer Greifereinheit (14) nach einem der voranstehenden Ansprüche und mit einer Handhabungseinheit (12), die mit der Greifereinheit verbunden ist.
